# FASCICULE DE BREVET EUROPEEN

(11) **EP 3 017 935 B1**
(45) Date de publication et mention de la délivrance du brevet: **20.12.2017**
(21) Numéro de dépôt: 15189466.4
(22) Date de dépôt: 13.10.2015
(51) Int. Cl.: B29C 70/08, B29C 65/00, B32B 27/00, B32B 5/22, B32B 5/24, B32B 5/26, B32B 9/00, B32B 9/04, B29C 70/44

(54) **PROCEDE DE FABRICATION D'UNE PIECE EN MATERIAU COMPOSITE COMPRENANT UNE PROTECTION THERMIQUE ET PIECE EN MATERIAU COMPOSITE FABRIQUEE SELON LEDIT PROCEDE**
HERSTELLUNGSVERFAHREN EINES WERKSTÜCKS AUS VERBUNDMATERIAL, DAS EINE WÄRMEDÄMMUNG UMFASST, UND MIT DIESEM VERFAHREN HERGESTELLTES VERBUNDMATERIAL-WERKSTÜCK
METHOD FOR MANUFACTURING A PART MADE OF A COMPOSITE MATERIAL COMPRISING HEAT PROTECTION AND PART MADE OF A COMPOSITE MATERIAL MANUFACTURED ACCORDING TO SAID METHOD

(30) Priorité: 07.11.2014 FR 1460777
(43) Date de publication de la demande: 11.05.2016
(73) Titulaire: AIRBUS OPERATIONS (S.A.S), 31060 Toulouse (FR)
(72) Inventeur: COLLART, Cyrille, 44000 NANTES (FR); RAVISE, Florian, 44000 NANTES (FR)
(74) Mandataire: Gicquel, Olivier Yves Gérard

(56) Documents cités:
- WO-A1-2006/066593
- WO-A1-2007/109855
- DE-A1-102006 061 123
- US-A1- 2006 118 992
- US-A1- 2014 008 838
- Anonymous: "Papyex Graphite Souple Guide Technique", Mersen , 2 mai 2012 (2012-05-02), page 14PP, XP002755150, Extrait de l'Internet: URL:https://www.mersen.com/uploads/tx_mers en/12-PAPYEX-graphite-expanse-Mersen.pdf [extrait le 2016-03-07]

## Description

La présente invention se rapporte à un procédé de fabrication d'une pièce en matériau composite qui comprend une protection thermique ainsi qu'à une pièce en matériau composite fabriquée selon ledit procédé.

Pour réduire la masse de l'aéronef, de plus en plus de pièces sont réalisées en matériau composite. Une pièce en matériau composite comprend des fibres noyées dans une matrice de résine.

Selon un mode de réalisation, décrit dans le document WO20060066593, une pièce composite est réalisée en disposant un film thermoplastique sur une face d'un moule perforé avant de déposer sur ledit film un nombre défini de couches de fibres, une résine est ensuite ajoutée à l'ensemble.

Certaines de ces pièces, comme par exemple des panneaux formant le longeron supérieur d'un mât de réacteur, sont à proximité de flux d'air chauds et sont soumises à des températures élevées.

Pour ne pas altérer leurs propriétés mécaniques et esthétique, ces panneaux en matériau composite comprennent une protection thermique.

On connait par le document US2006118992, un procédé de fabrication d'une pièce composite comprenant une double couche d'isolation thermique. Le procédé décrit comprend une étape de fabrication d'un premier pré-imprégné comportant des fibres en silice et une étape de fabrication d'un deuxième pré-imprégné comportant des fibres en polyacrylonitrile. Le premier pré-imprégné constitue la couche interne d'isolant thermique de la pièce composite et le deuxième pré-imprégné constitue la couche externe d'isolant thermique de la pièce composite.

Selon un mode de réalisation connu, une peinture résistante à haute température est appliquée sur l'une des faces du panneau à protéger pour former une protection thermique.

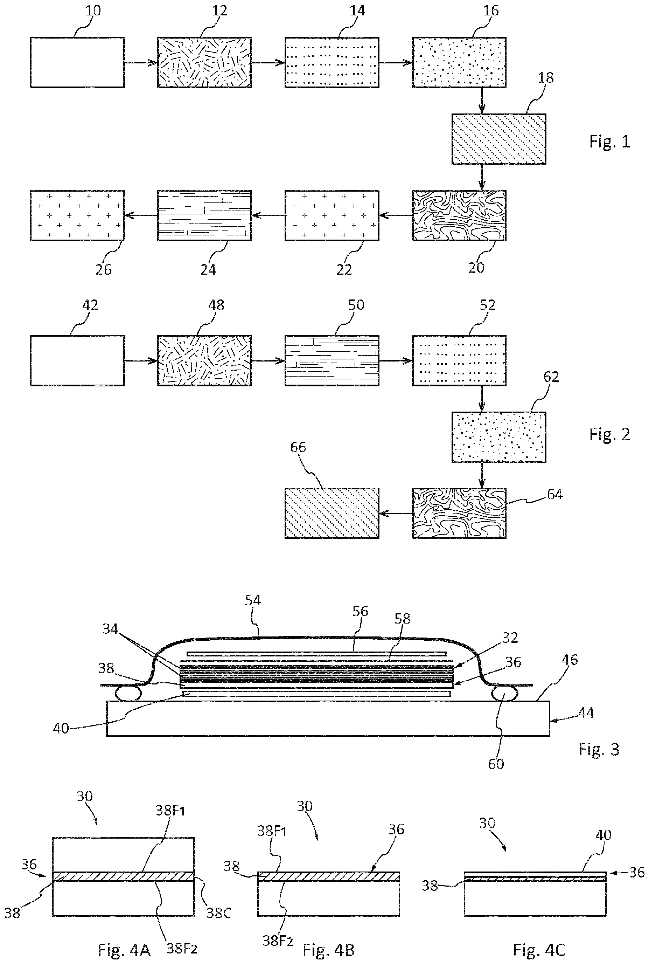

Selon un mode opératoire illustré sur la figure 1, un procédé de fabrication d'un panneau en matériau composite qui intègre une protection thermique comprend:
- Une étape 10 de préparation d'un outillage comprenant une surface de dépose,
- Une étape 12 de mise en place des fibres sur la surface de dépose de l'outillage de manière à obtenir une préforme de fibres,
- Une étape 14 de mise en place autour des fibres d'un environnement de polymérisation (ou de consolidation) qui comprend notamment une vessie de compactage, un tissu drainant, un film de démoulage et des moyens d'étanchéité avec la surface de dépose,
- Une étape 16 de polymérisation ou de consolidation visant à solidifier, par association de molécules de résine, la préforme de fibres de manière à obtenir un panneau en matériau composite,
- Une étape 18 de démoulage,
- Une étape 20 de détourage du panneau en matériau composite,
- Une étape 22 de préparation des surfaces du panneau en matériau composite devant être peintes,
- Une étape 24 d'application d'une peinture résistante à haute température,
- Une étape 26 de séchage de la peinture.

La composition d'une peinture résistante à haute température est notamment adaptée en fonction du support (matériau métallique ou matériau composite) sur lequel elle est appliquée. Pour chaque composition, des composants sont mélangés avec des dosages précis. Les conditions environnementales d'utilisation (température, corrosion), les exigences de conductivité et la nature des fibres et/ou de résine étant différentes entre les différentes pièces d'un aéronef, il est nécessaire de préparer et de gérer plusieurs compositions, chacune d'elles étant adaptée à un type de pièces.

Selon un autre inconvénient, l'application d'une peinture résistante à haute température nécessite une préparation spécifique de la surface sur laquelle elle doit être appliquée pour favoriser son accroche. Cette étape induit des équipements dédiés, une durée et des coûts supplémentaires.

Selon un autre inconvénient, le séchage des peintures résistantes à haute résistance est réalisé dans une enceinte chauffante telle qu'une étuve ou à température ambiante. Ce séchage et sa durée varient d'une peinture à l'autre, et par conséquent, doivent être adaptés en fonction des pièces qui ne sont pas revêtues des mêmes peintures résistantes à haute température.

De plus, en raison de la composition spécifique d'une peinture résistante à haute température et des contraintes d'application d'une telle peinture, la pose d'une peinture résistante à haute température se fait dans une enceinte contrôlée en hygrométrie et température, donc dans des bâtiments ou des zones de bâtiments dédiés coûteux en construction et en entretien.

Enfin, l'étape 26 de séchage d'une peinture à haute résistance a une durée plus longue que celle d'une autre peinture, ne résistant pas à haute température, ce qui conduit à immobiliser les pièces pendant des durées plus importantes et nécessairement à surenchérir le coût de production.

La présente invention vise à remédier aux inconvénients de l'art antérieur.

A cet effet, l'invention a pour objet un procédé de fabrication d'une pièce en matériau composite selon la revendication 1. Le procédé de l'invention permet de supprimer les étapes liées à la mise en place de la protection thermique sous forme de peinture, comme l'étape de préparation des surfaces à peindre et de séchage spécifique ainsi que les équipements associés (enceinte dédiée à l'application de peinture). La suppression de ces étapes permet d'obtenir un gain de temps. De plus, il permet de supprimer une étape de séchage spécifique aux peintures résistantes à haute température qui est énergivore.

Selon une première variante, l'étape de mise en place d'au moins une plaque suit l'étape de réalisation de la préforme de fibres. De préférence, il comprend une étape de mise en place d'un revêtement après l'étape de mise en place d'au moins une plaque.

Selon une deuxième variante, l'étape de mise en place d'au moins une plaque précède l'étape de réalisation de la préforme de fibres. De préférence, il comprend une étape de mise en place d'un revêtement avant l'étape de mise en place d'au moins une plaque.

Selon une troisième variante, l'étape de mise en place d'au moins une plaque est réalisée pendant l'étape de réalisation de la préforme de fibres.

De préférence, la plaque est une feuille souple. Ainsi, la plaque peut se déformer de manière à s'adapter à la géométrie de la pièce qui n'est pas forcément plane. Conformément à l'invention, la feuille souple est une feuille de graphite souple. Cette configuration permet d'obtenir un compromis entre la masse de la protection thermique et ses performances sur le plan thermique.

L'invention a également pour objet une pièce en matériau composite comprenant des fibres noyées dans une matrice de résine et une protection thermique, ladite pièce étant fabriquée à partir du procédé de l'invention. Conformément à l'invention, la feuille souple est une feuille de graphite souple.

Avantageusement, la protection thermique comprend un revêtement appliqué sur l'une des deux faces de la plaque.

D'autres caractéristiques et avantages ressortiront de la description qui va suivre de l'invention, description donnée à titre d'exemple uniquement, en regard des dessins annexés sur lesquels :
- La figure 1 est un schéma d'un procédé de fabrication d'une pièce en matériau composite qui illustre l'art antérieur,
- La figure 2 est un schéma d'un procédé de fabrication d'une pièce en matériau composite qui illustre l'invention,
- La figure 3 est une coupe des différents parties d'une pièce en matériau composite sur un outillage et recouverte d'un environnement de polymérisation ou de consolidation qui illustre l'invention,
- Les figures 4A à 4C sont des coupes de pièces en matériau composite comportant une protection thermique qui illustrent trois variantes de l'invention.

Une pièce en matériau composite 30 comprend des fibres noyées dans une matrice de résine. Cette pièce en matériau composite 30 est obtenue à partir d'une préforme de fibres 32 (visible sur la figure 3) après une étape de consolidation ou de polymérisation. Par préforme de fibres, on entend un volume de fibres. Généralement, la préforme de fibres 32 comprend une superposition de couches de fibres 34, appelées plis, noyées dans une matrice de résine.

Sur les figures 3, 4A à 4C, la préforme 32 et la pièce 30 en matériau composite ont une section rectangulaire qui correspond à celle par exemple d'un panneau parallélépipédique. Bien entendu, l'invention n'est pas limitée à cette géométrie pour la pièce en matériau composite.

La pièce 30 en matériau composite comprend une protection thermique 36.

Selon une caractéristique de l'invention, la protection thermique 36 comprend au moins une plaque 38 .

Selon une variante de réalisation, la plaque 38 est en un matériau thermiquement isolant. On comprendra par l'expression "matériau thermiquement isolant", un matériau dont la conductivité thermique est inférieure à 1 W.cm⁻¹.K⁻¹. Un tel matériau thermiquement isolant limite la montée en température de la pièce 30 en matériau composite.

Selon une autre variante de réalisation, la plaque 38 est en un matériau thermiquement étanche. On comprendra par l'expression "matériau thermiquement étanche", un matériau qui est imperméable à l'énergie thermique diffusée par le flux d'air chaud, soit parce-que sa structure absorbe l'énergie thermique du flux d'air chaud, soit parce-qu'elle réfléchit l'énergie thermique du flux d'air chaud, selon le matériau utilisé pour réaliser cette plaque 38. Selon cette autre variante de réalisation, la température de la pièce 30 est ainsi indépendante de son environnement et n'est donc pas soumise aux températures du flux d'air chaud. Un tel matériau est obtenu, par exemple, à partir de particules de graphite naturel expansé, tel que la feuille Graphite souple Papyex®.

Selon une autre caractéristique de l'invention, la plaque 38 est mise en place avant l'étape de polymérisation ou de consolidation de la pièce 30 en matériau composite.

Ainsi, la protection thermique 36 est intimement liée à la pièce 30 en matériau composite par une liaison chimique créée entre la matrice de la pièce 30 en matériau composite et la protection thermique 36 lors de l'étape de consolidation ou de polymérisation. Selon l'invention, l'accroche de la protection thermique 36 sur la pièce 30 ne nécessite ni préparation spécifique de la pièce, ni ajout d'une matière adhésive pour faire adhérer la protection thermique à la pièce en matériau composite.

Avantageusement, la plaque 38 est une plaque mince telle qu'une feuille souple. Cette configuration permet à la plaque 38 de pouvoir se déformer de manière à s'adapter à la géométrie de la pièce. Conformément à l'invention, la plaque 38 e est une feuille de graphite souple. Selon un mode de réalisation, la feuille de graphite souple est obtenue à partir de particules de graphite naturel expansé, telle que la feuille Graphite souple Papyex®.

Ainsi, il est possible d'ajuster l'épaisseur de la feuille de graphite souple et/ou sa densité de manière à ajuster les propriétés thermiques de la protection thermique 36.

La plaque 38 comprend une première face 38F1 et une seconde face 38F2 ainsi qu'un chant 38C.

Selon certaines applications, la protection thermique 36 comprend, en plus de la plaque 38, un revêtement 40 appliqué sur l'une des deux faces 38F1 ou 38F2 de la plaque 38.

Selon un mode de réalisation, ce revêtement 40 est un film de résine. Ce revêtement 40 permet d'obtenir une fonction protection, notamment contre les impacts, et de modifier l'aspect visuel de la protection thermique 36. Avantageusement, la résine utilisée pour le revêtement 40 est la même que celle de la matrice dans laquelle sont noyées les fibres de la pièce 30.

Selon une première variante illustrée sur la figure 4A, la protection thermique 36 est intégrée dans la pièce 30 en matériau composite. Lors de sa mise en place, la plaque 38 est intercalée entre deux couches de fibres de la préforme 32. Selon cette variante, les deux faces 38F1 et 38F2 de la plaque 38 sont recouvertes par les fibres et la matrice de la pièce 30.

Selon une deuxième variante illustrée sur la figure 4B, la protection thermique 36 est plaquée contre la pièce 30 en matériau composite. Selon cette variante, la plaque 38 est mise en place avant la préforme 32 de fibres sur la surface de dépose ou après la préforme 32 sur la dernière couche de fibres. L'une des deux faces 38F1 n'est pas recouverte par les fibres et/ou la matrice de la pièce 30.

Selon une troisième variante illustrée sur la figure 4C, la protection thermique 36 est intercalée entre la pièce 30 en matériau composite et un revêtement 40. Selon cette variante, la plaque 38 est mise en place après la mise en place du revêtement 40 mais avant la préforme 32 de fibres ou après la préforme 32 mais avant la mise en place du revêtement 40. Ainsi, l'une des deux faces 38F1 est recouverte par le revêtement 40 alors que l'autre face 38F2 est en contact avec les fibres et/ou la matrice de la pièce 30.

Selon un mode opératoire illustré sur la figure 2, un procédé de fabrication d'une pièce en matériau composite qui intègre une protection thermique comprend :
- Une étape 42 de préparation d'un outillage 44 comprenant une surface de dépose 46,
- Une étape 48 de réalisation de l'une préforme 32 en déposant des fibres sur la surface de dépose 46 de l'outillage,
- Une étape 50 de mise en place de la protection thermique 36,
- Une étape 52 de mise en place d'un environnement de polymérisation ou de consolidation qui recouvre la préforme 32 de fibres et qui comprend par exemple

une vessie de compactage 54, un tissu drainant 56, un film de démoulage 58 et des moyens d'étanchéité 60 avec la surface de dépose 46,
- Une étape 62 de polymérisation ou de consolidation visant à solidifier la préforme 32 de fibres noyée dans une matrice de résine de manière à obtenir une pièce en matériau composite,
- Une étape 64 de démoulage,
- Une étape 66 de détourage du panneau en matériau composite.

Le procédé de l'invention permet de supprimer les étapes liées à la mise en place de la protection thermique sous forme de peinture, comme l'étape de préparation des surfaces à peindre et de séchage spécifique.

Les étapes 42, 48, 52, 62, 64, 66 peuvent être identique à celles de l'art antérieur. Par conséquent, elles ne sont pas plus détaillées.

Selon un premier mode opératoire, l'étape 50 de mise en place de la protection 36 suit l'étape 48 de réalisation de la préforme 32 de fibres, comme illustré sur la figure 2, de manière à obtenir une pièce en matériau composite selon les variantes illustrées sur les figures 4B et 4C.

Selon un deuxième mode opératoire, l'étape 50 de mise en place de la protection 36 précède l'étape 48 de réalisation de la préforme 32 de fibres, comme illustré sur la figure 3, de manière à obtenir une pièce en matériau composite selon les variantes illustrées sur les figures 4B et 4C.

Selon un autre mode opératoire, l'étape 50 de mise en place de la protection 36 est réalisée pendant l'étape 48 de réalisation de la préforme 32 de fibres de manière à ce que ladite protection thermique soit intercalée entre les fibres de la préforme pour obtenir une pièce en matériau composite selon les variantes illustrées sur la figure 4A.

La mise en place de la protection thermique peut être réalisée manuellement ou de manière automatisée.

Quel que soit le mode opératoire, le procédé de fabrication d'une pièce en matériau composite comprend une étape de réalisation d'une préforme de fibres, une étape de mise en place d'au moins une plaque 38 dont au moins une face est en contact avec ladite préforme et une étape de consolidation ou de polymérisation de ladite préforme de fibres noyée dans une matrice de résine.

Le procédé de l'invention est plus particulièrement adapté pour fabriquer des panneaux en matériau composite qui forment la partie arrière et inférieure du carénage d'un mât de réacteur (appelé Aft Pylon Fairing en anglais). Toutefois, le procédé de fabrication n'est pas limité à ce type de panneaux. Il peut être utilisé pour fabriquer toutes pièces en matériau composite qui nécessite une protection thermique.

## Revendications

1. Procédé de fabrication d'une pièce (30) en matériau composite qui comprend une protection thermique (36), ledit procédé de fabrication comprenant
une étape (48) de réalisation d'une préforme (32) de fibres et une étape (62) de consolidation ou de polymérisation de ladite préforme (32) de fibres noyées dans une matrice de résine, **caractérisé en ce que** ledit procédé comprend une étape (50) de mise en place, avant l'étape (62) de polymérisation ou de consolidation, d'au moins une feuille de graphite souple (38) dont au moins une face (38F1, 38F2) est en contact avec ladite préforme de fibres.

2. Procédé selon la revendication 1, **caractérisé en ce que** l'étape (50) de mise en place d'au moins une feuille de graphite souple (38) suit l'étape (48) de réalisation de la préforme (32) de fibres.

3. Procédé selon la revendication 2, caractérisé en qu'il comprend une étape de mise en place d'un revêtement (40) après l'étape (50) de mise en place d'au moins une feuille de graphite souple (38).

4. Procédé selon la revendication 1, **caractérisé en ce que** l'étape (50) de mise en place d'au moins une feuille de graphite souple (38) précède l'étape (48) de réalisation de la préforme (32) de fibres.

5. Procédé selon la revendication 4, caractérisé en qu'il comprend une étape de mise en place d'un revêtement (40) avant l'étape (50) de mise en place d'au moins une feuille de graphite souple (38).

6. Procédé selon la revendication 1, **caractérisé en ce que** l'étape (50) de mise en place d'au moins une feuille de graphite souple (38) est réalisée pendant l'étape (48) de réalisation de la préforme (32) de fibres.

7. Pièce en matériau composite comprenant des fibres noyées dans une matrice de résine et une protection thermique (36), ladite pièce étant fabriquée à partir du procédé selon l'une des revendications précédentes et étant **caractérisée en ce que** la protection thermique (36) comprend au moins une feuille de graphite souple (38), une liaison chimique créée lors d'une étape de consolidation ou de polymérisation assurant la liaison entre la matrice de la pièce (30) en matériau composite et la feuille de graphite souple (38).

8. Pièce en matériau composite selon la revendication 7, **caractérisée en ce que** la protection thermique (36) comprend un revêtement (40) appliqué sur l'une des deux faces (38F1, 38F2) de la feuille de graphite souple (38).

## Patentansprüche

1. Verfahren zur Herstellung eines Teils (30) aus Verbundmaterial, welches einen Wärmeschutz (36) umfasst, wobei das Herstellungsverfahren umfasst:
einen Schritt (48) der Herstellung einer Vorform (32) aus Fasern und einen Schritt (62) der Verfestigung oder der Polymerisation der Vorform (32) von in eine Harzmatrix eingebetteten Fasern, **dadurch gekennzeichnet, dass** das Verfahren einen Schritt (50) der Anbringung, vor dem Schritt (62) der Polymerisation oder der Verfestigung, wenigstens einer flexiblen Graphitfolie (38) umfasst, von welcher sich wenigstens eine Seite (38F1, 38F2) in Kontakt mit der Faservorform befindet.

2. Verfahren nach Anspruch 1, **dadurch gekennzeichnet, dass** der Schritt (50) der Anbringung wenigstens einer flexiblen Graphitfolie (38) auf den Schritt (48) der Herstellung der Vorform (32) aus Fasern folgt.

3. Verfahren nach Anspruch 2, **dadurch gekennzeichnet, dass** es einen Schritt der Anbringung einer Beschichtung (40) nach dem Schritt (50) der Anbringung wenigstens einer flexiblen Graphitfolie (38) umfasst.

4. Verfahren nach Anspruch 1, **dadurch gekennzeichnet, dass** der Schritt (50) der Anbringung wenigstens einer flexiblen Graphitfolie (38) dem Schritt (48) der Herstellung der Vorform (32) aus Fasern vorausgeht.

5. Verfahren nach Anspruch 4, **dadurch gekennzeichnet, dass** es einen Schritt der Anbringung einer Beschichtung (40) vor dem Schritt (50) der Anbringung wenigstens einer flexiblen Graphitfolie (38) umfasst.

6. Verfahren nach Anspruch 1, **dadurch gekennzeichnet, dass** der Schritt (50) der Anbringung wenigstens einer flexiblen Graphitfolie (38) während des Schrittes (48) der Herstellung der Vorform (32) aus Fasern ausgeführt wird.

7. Teil aus Verbundmaterial, welches in eine Harzmatrix eingebettete Fasern und einen Wärmeschutz (36) umfasst, wobei das Teil mithilfe des Verfahrens nach einem der vorhergehenden Ansprüche hergestellt wird und **dadurch gekennzeichnet ist, dass** der Wärmeschutz (36) wenigstens eine flexible Graphitfolie (38) umfasst, wobei eine chemische Bindung, die in einem Schritt der Verfestigung oder der Polymerisation erzeugt wird, die Verbindung zwischen der Matrix des Teils (30) aus Verbundmaterial und der flexiblen Graphitfolie (38) sicherstellt.

8. Teil aus Verbundmaterial nach Anspruch 7, **dadurch gekennzeichnet, dass** der Wärmeschutz (36) eine Beschichtung (40) umfasst, die auf eine der beiden Seiten (38F1, 38F2) der flexiblen Graphitfolie (38) aufgebracht ist.

## Claims

1. Process for manufacturing a composite part (30) that comprises a thermal protection (36), said manufacturing process comprising
a step (48) of producing a preform (32) of fibres and a step (62) of consolidating or of polymerizing said preform (32) of fibres embedded in a resin matrix, **characterized in that** said process comprises a step (50) of positioning, before the polymerization or consolidation step (62) at least one flexible graphite sheet (38), at least one face (38F1, 38F2) of which is in contact with said preform of fibres.

2. Process according to Claim 1, **characterized in that** the step (50) of positioning at least one flexible graphite sheet (38) follows the step (48) of producing the preform (32) of fibres.

3. Process according to Claim 2, **characterized in that** it comprises a step of positioning a coating (40), after the step (50) of positioning at least one flexible graphite sheet (38).

4. Process according to Claim 1, **characterized in that** the step (50) of positioning at least one flexible graphite sheet (38) precedes the step (48) of producing the preform (32) of fibres.

5. Process according to Claim 4, **characterized in that** it comprises a step of positioning a coating (40), before the step (50) of positioning at least one flexible graphite sheet (38).

6. Process according to Claim 1, **characterized in that** the step (50) of positioning at least one flexible graphite sheet (38) is carried out during the step (48) of producing the preform (32) of fibres.

7. Composite part comprising fibres embedded in a resin matrix and a thermal protection (36), said part being manufactured using the process according to one of the preceding claims and being **characterized in that** the thermal protection (36) comprises at least one flexible graphite sheet (30), a chemical bond created during a consolidation or polymerization step providing the bonding between the matrix of the composite part (30) and the flexible graphite sheet (38).

8. Composite part according to Claim 7, **characterized in that** the thermal protection (36) comprises a coating (40) applied to one of the two faces (38F1, 38F2) of the flexible graphite sheet (38).
